# EUROPÄISCHE PATENTSCHRIFT

(11) **EP 4 632 429 B1**
(45) Veröffentlichungstag und Bekanntmachung des Hinweises auf die Patenterteilung: **18.03.2026**
(21) Anmeldenummer: 25167294.5
(22) Anmeldetag: 31.03.2025
(51) Int. Cl.: G01S 7/481, G01S 7/497, G01S 17/42, G01S 17/86, G01S 17/931

(54) **NAVIGATIONSSENSOR**
NAVIGATION SENSOR
CAPTEUR DE NAVIGATION

(30) Priorität: 12.04.2024 DE 102024110236
(43) Veröffentlichungstag der Anmeldung: 15.10.2025
(73) Patentinhaber: SICK AG, 79183 Waldkirch (DE)
(72) Erfinder: BEINSCHOB, Patric, 22043 Hamburg (DE)
(74) Vertreter: Manitz Finsterwald Patent- und Rechtsanwaltspartnerschaft mbB

(56) Entgegenhaltungen:
- EP-A1- 3 736 607
- EP-A1- 4 332 495
- EP-B1- 3 736 603
- DE-A1- 19 918 140
- GB-A- 2 573 090
- LUO LI ET AL: "Crawler Robot Indoor Positioning Based on a Combination of Bluetooth and IMU", 2022 6TH INTERNATIONAL CONFERENCE ON ROBOTICS, CONTROL AND AUTOMATION (ICRCA), IEEE, 26 February 2022 (2022-02-26), pages 34 - 39, XP034153063, DOI: 10.1109/ICRCA55033.2022.9829003

## Beschreibung

Die vorliegende Erfindung betrifft einen Navigationssensor zum Bestimmen eines Koordinatendatensatzes, welcher eine räumliche Position und/oder eine Lage und/oder eine Bewegung des Navigationssensors oder eines mit dem Navigationssensor verbundenen beweglichen Objekts im Raum umfasst. Der Navigationssensor umfasst einen Objekterfassungssensor, welcher zur periodischen Abtastung eines Überwachungsbereichs eingerichtet ist und eine Sockeleinheit und eine an der Sockeleinheit rotierbar gelagerte Abtasteinheit umfasst. Die Abtasteinheit weist eine Sendevorrichtung, welche zum Aussenden von Sendesignalen in einen Überwachungsbereich eingerichtet ist, und eine Empfangsvorrichtung auf, welche zum Empfangen von Empfangssignalen, die von im Überwachungsbereich vorhandenen Objekten durch Remission auftreffender Sendesignale erzeugt werden, und zum Umwandeln der Empfangssignale in elektrische Empfangssignale eingerichtet ist. Der Navigationssensor umfasst ferner eine mit dem Objekterfassungssensor verbundene Auswerteeinheit, welche dazu eingerichtet ist, zumindest auf der Grundlage der elektrischen Empfangssignale den Koordinatendatensatz zu ermitteln.

Auf dem Gebiet der Automatisierungstechnik kommen zunehmend bewegliche Vorrichtungen wie mobile Roboter, selbstfahrende Fördervorrichtungen oder selbstfahrende Fahrzeuge zum Einsatz, welche sich in einer oder mehreren Dimensionen autonom oder gesteuert im Raum bewegen können. Für einen sicheren Betrieb derartiger Roboter oder Fördervorrichtungen ist es erforderlich, dass diese im Raum lokalisiert werden können.

Zu diesem Zweck sind gattungsgemäße Navigationssensoren vorgesehen, die an einem beweglichen Objekt, z.B. einem Roboterarm, einer Roboterplattform oder einer Fördervorrichtung angeordnet werden können und dazu eingerichtet sind, einen Koordinatendatensatz zu bestimmen, der die Lokalisation des Navigationssensors bzw. des mit dem Navigationssensor verbundenen beweglichen Objekts ermöglicht.

In Abhängigkeit von den Freiheitsgraden, in welchen sich das mit dem Navigationssensor verbundene bewegliche Objekt bewegen kann, kann der Koordinatendatensatz die Position, d.h. den Ort im Raum, in ein, zwei oder drei Dimensionen, die Lage, d. h. die Ausrichtung im Raum, in ein, zwei oder drei Dimensionen und gegebenenfalls auch deren zeitliche Ableitungen, d. h. z.B. eine lineare Bewegung und/oder eine Drehbewegung in ein, zwei oder drei Dimensionen, umfassen. Die zeitlichen Ableitungen können sich sowohl auf die erste Ableitung, d. h. Lineargeschwindigkeiten und/oder Winkelgeschwindigkeiten, als auch auf die zweite Ableitung, d. h. Linearbeschleunigungen und/oder Winkelbeschleunigungen, beziehen. Die Darstellung des Koordinatendatensatzes kann in einem geeigneten lokalen oder globalen Koordinatensystem erfolgen.

Die Lokalisation des Navigationssensors bzw. des damit verbundenen beweglichen Objekts erfolgt primär mit Hilfe eines Objekterfassungssensor, welcher beispielsweise als optoelektronischer Sensor, vorzugsweise als Laserscanner oder als LIDAR (von engl. "Light imaging, detection and ranging", bezeichnet eine Form des dreidimensionalen Laserscannings), oder auch als Radarsensor (von engl. "radio detection and ranging", bezeichnet eine Form der funkgestützten Richtungs- und Abstandsmessung) ausgebildet sein kann.

Bei einem Laserscanner überstreicht ein von einem Laser erzeugter Lichtstrahl bzw. eine Lichtpulssequenz mit Hilfe einer Ablenkeinheit periodisch eine Überwachungs- oder Abtastebene. Die in Form von Sendelicht emittierten Sendesignale werden an gegebenenfalls vorhandenen Objekten remittiert (insbesondere zum Beispiel diffus reflektiert) und nach Empfang in der Empfangsvorrichtung und Umwandlung in entsprechende elektrische Empfangssignale von der Auswerteeinheit ausgewertet. Bei einem als Radarsensor ausgestalteten Objekterfassungssensor werden die Sendesignale in Form von gebündelten elektromagnetischen Wellen im Radiofrequenzbereich emittiert und an gegebenenfalls vorhandenen Objekten remittiert (insbesondere zum Beispiel diffus reflektiert) und nach Empfang in der Empfangsvorrichtung und Umwandlung in entsprechende elektrische Empfangssignale von der Auswerteeinheit ausgewertet. Die Ablenkeinheit ist durch eine Sockeleinheit und eine an der Sockeleinheit rotierende Abtasteinheit gebildet. Die Position eines erfassten Objekts kann aus der Winkelstellung der Abtasteinheit relativ zur Sockeleinheit und der Signallaufzeit der Sendesignale zwischen der Aussendung durch die Sendevorrichtung und dem Empfang in der Empfangsvorrichtung ermittelt werden. Eine Überwachung in mehreren Abtastebenen beziehungsweise in drei Dimensionen, kann z.B. durch eine Ausgestaltung des Objekterfassungssensors als Mehrebenenscanner mit mehreren Abtaststrahlen oder als ein LIDAR- oder Radarsystem, bei dem ein zusätzliches Verschwenken des Sendelichtbündels bzw. des Radarstrahlenbündels um eine senkrecht zur Drehachse der Ablenkeinheit verlaufende Schwenkachse vorgesehen ist. Bei einem als optoelektronischen Sensor ausgebildeten Objekterfassungssensor kann die Erfassung der Empfangslichtsignale in der Empfangsvorrichtung nicht-ortsauflösend, z. B. mittels einer Einzelfotodiode, oder ortsauflösend, z. B. mittels eines Zeilensensors oder eines Bildsensors, erfolgen. Die Sendelichtsignale können bei einem als optoelektronischen Sensor ausgebildeten Objekterfassungssensor sowohl im sichtbaren als auch im nicht-sichtbaren Bereich (Ultraviolett- oder Infrarotbereich) emittiert werden.

Ein beispielhafter optoelektronischer Sensor mit einer Sockeleinheit und einer rotierbar daran gelagerten Abtasteinheit ist in EP 3 736 603 B1 beschrieben. Zur Messung von Objektabständen sind auf der Abtasteinheit ein oder mehrere Lichtlaufzeitmodule angeordnet, welche zur Entfernungsmessung nach dem Lichtlaufzeitprinzip eingerichtet sind. Zusätzliche optische oder nicht-optische Module können in der Abtasteinheit angeordnet sein, wobei beispielhaft ein Inertialsensor genannt ist.

Durch die Abtastung eines zwei- oder dreidimensionalen Raumbereichs mittels des Objekterfassungssensors kann sozusagen mittels der Auswerteeinheit ein Abbild der Szene oder Umgebung erzeugt werden, in welcher sich der Navigationssensor bzw. das bewegliche Objekt befindet bzw. sich darin bewegt. Im realen Betrieb kann die Lokalisation jedoch zeitweise aufgrund von unpassenden Umgebungsbedingungen gestört sein. So kann beispielsweise eine Lokalisation in Korridoren oder Tunneln aufgrund von mangelnder Eindeutigkeit der Umgebung beeinträchtigt sein. Auch eine zeitweise partielle oder totale Verdeckung des Sichtfelds des Objekterfassungssensors durch Fremdobjekte oder durch Umwelteinflüsse wie Staub oder Nebel kann die Lokalisation beeinträchtigen oder sogar unmöglich machen.

Um derartige Störungen überbrücken zu können, kann die optische Navigation oder Lokalisation mit zusätzlichen Navigationsmitteln ergänzt werden, welche zeitweilige Ausfälle oder Fehlfunktionen der optischen oder radarbasierten Navigation kompensieren können. Hierfür können beispielsweise Wegstreckenzähler eingesetzt werden, welche beispielsweise mit Antriebsrädern gekoppelt sind und deren Drehwinkel und/oder Winkelgeschwindigkeit erfassen können. Hierdurch kann die zurückgelegte Wegstrecke während eines Ausfalls der optischen Navigation mitgekoppelt werden und dadurch der aktuelle Standort ermittelt werden.

Des Weiteren können auch Vorrichtungen eingesetzt werden, die Bewegungen oder Bewegungsänderungen gemäß dem Prinzip der Trägheitsnavigation erfassen können. Derartige Trägheitsnavigationssysteme sind jedoch oftmals kostspielig und aufwändig zu kalibrieren.

GB 2 573 090 A betrifft eine Vorrichtung zum Bestimmen der Position eines entfernten Objekts. Die Vorrichtung umfasst eine Abstandsmesseinheit zur Abstandsmessung des entfernten Objekts und eine Richtungsmesseinheit zur Richtungsbestimmung dieses Objekts. Diese Einheiten sind um zwei Achsen rotierbar. Die Richtungsmesseinheit kann einen oder mehrere Richtungssensoren wie beispielsweise Beschleunigungsmesser, Gyroskope und/oder Magnetometer umfassen.

EP 4 332 495 A1 und EP 3 736 607 A1 betreffen ebenfalls Abstandssensoren, bei denen Inertialsensoren vorgesehen sind, welche jedoch nicht an einer rotierbaren Abtasteinheit angeordnet sind.

Es ist die Aufgabe der Erfindung, einen Navigationssensor der eingangs genannten Art auf kostengünstige Weise derart weiterzubilden, dass zeitweilige Ausfälle oder Fehlfunktionen des Objekterfassungssensors kompensiert oder überbrückt werden können.

Die Lösung der Aufgabe erfolgt durch einen Navigationssensor mit den Merkmalen des Anspruchs 1. Erfindungsgemäß ist vorgesehen, dass an der Abtasteinheit zumindest eine mit der Auswerteeinheit verbundene inertiale Messeinheit angeordnet ist, welche dazu eingerichtet ist, Beschleunigungen und/oder Winkelgeschwindigkeiten der rotierenden Abtasteinheit zu erfassen und entsprechende Beschleunigungssignale und/oder Winkelgeschwindigkeitssignale an die Auswerteeinheit zu übermitteln, und dass die Auswerteeinheit dazu eingerichtet ist, den Koordinatendatensatz zusätzlich auf der Grundlage der Beschleunigungssignale und/oder Winkelgeschwindigkeitssignale zu ermitteln.

Eine inertiale Messeinheit ist eine Kombination mehrerer Bewegungssensoren, welche Beschleunigungen und/oder Winkelgeschwindigkeiten in einer, zwei oder drei Dimensionen erfassen können, wobei die Beschleunigungen und/oder Winkelgeschwindigkeiten basierend auf dem Prinzip der Massenträgheit ermittelt werden.

Änderungen der Position, z. B. lineare Bewegungen, bzw. Änderungen der Lage, z. B. Rotationen, können beispielsweise durch Aufintegration der Beschleunigungssignale beziehungsweise der Winkelgeschwindigkeitssignale ermittelt werden. Derartige inertiale Messeinheiten, welche auch als IMU (von engl. "inertial measurement unit") bezeichnet werden, sind kommerziell in Abhängigkeit von dem Funktionsprinzip und der gewünschten Präzision teilweise zu sehr niedrigen Kosten erhältlich. Durch die Kombination aus Objekterfassungssensor und initialer Messeinheit können beispielsweise Ausfälle des Objekterfassungssensors, etwa aufgrund von ungünstigen Umgebungsbedingungen wie Staub, Regen, Schnee oder fehlendem Kontrast aufgrund unzureichender Beleuchtung oder fehlenden Konturen in der von dem Objekterfassungssensor erfassten Szene, kompensiert werden, die eine Erfassung der Umgebung des Navigationssensors nicht zulassen oder verfälschen.

Durch die Anordnung der inertialen Messeinheit auf der rotierenden Abtasteinheit wirken während des Betriebs des Navigationssensors auch dann Kräfte beziehungsweise Beschleunigungen, wenn sich der Navigationssensor beziehungsweise ein damit verbundenes bewegliches Objekt in Ruhe, d.h. in einer stationären Position und Lage, befindet. Durch die Rotation der inertialen Messeinheit wird den Ausgangsignalen der inertialen Messeinheit eine Art Offset oder ein Ruhesignal überlagert, was eine Unterdrückung von Ausgangssignalen nahe dem Nullpunkt verhindert. Bei vielen Bauformen von inertialen Messeinheiten ist nämlich standardmäßig eine solche Nullpunktunterdrückung vorgesehen, um das Erzeugen von fehlerhaften Ausgangssignalen zu verhindern, wenn sich die inertiale Messeinheit beziehungsweise ein damit ausgerüstetes Gerät in Ruhe befindet und die Bewegungssensoren der IMU nur geringe Signalpegel nahe des Nullpunkts liefern. Bei dieser Nullpunktunterdrückung werden Signale, die unterhalb definierter Schwellenwerte liegen und ggf. noch andere Kriterien erfüllen, herausgefiltert. Eine solche Nullpunktunterdrückung kann durch die Anordnung der inertialen Messeinheit an der rotierenden Abtasteinheit auf einfache Weise und insbesondere ohne Anpassungen der Schaltung der inertialen Messeinheit umgangen werden, wobei aufgrund der Rotation die Signalpegel auf ein Niveau oberhalb der Schwellenwerte ansteigen. Dadurch wird vermieden, auf kostspielige Sonderanfertigungen von inertialen Messeinheiten zurückgreifen zu müssen, bei welchen eine solche Nullpunktunterdrückung nicht vorgesehen oder zumindest deaktivier ist.

Je nach der konkreten Anordnung und Ausrichtung der inertialen Messeinheit relativ zur Abtasteinrichtung wirken die bei der Rotation der Abtasteinheit auftretenden Zentrifugalkräfte nur auf einen Teil der einzelnen Sensorkomponenten der inertialen Messeinheit, sodass möglicherweise nicht für alle Teilsensoren der gewünschte Offset erzeugt werden kann. Sollte dies in Abhängigkeit vom jeweiligen Anwendungsfall nicht toleriert werden können, kann die inertiale Messeinheit in Bezug auf die Drehachse der Abtasteinheit so ausgerichtet werden, dass alle Bewegungsvektoren, die von der inertialen Messeinheit erfasst werden können, zumindest teilweise in Richtung des Zentrifugalkraftvektors ausgerichtet sind bzw. dass keiner der jeweils erfassbaren Bewegungsvektoren der inertialen Messeinheit genau senkrecht zum Zentrifugalkraftvektor verläuft.

Erfindungsgemäß umfasst der Navigationssensor einen mit der Auswerteinheit verbundenen Drehzahlsensor, welcher zum Ermitteln der Drehfrequenz der Abtasteinheit relativ zur Sockeleinheit eingerichtet ist, wobei die Auswerteeinheit dazu eingerichtet ist, auf der Grundlage der Drehfrequenz korrigierte Beschleunigungssignale und/oder Winkelgeschwindigkeitssignale zu ermitteln und den Koordinatendatensatz auf der Grundlage der korrigierten Beschleunigungssignale und/oder Winkelgeschwindigkeitssignale zu ermitteln, wobei das Ermitteln der korrigierten Beschleunigungssignale und/oder Winkelgeschwindigkeitssignale ein Reduzieren der Beschleunigungssignale und/oder der Winkelgeschwindigkeitssignale um diejenige Signalkomponenten umfasst, welche alleine auf die Rotation der Abtasteinheit zurückzuführen sind. Der genannte Drehzahlsensor kann beispielsweise ein separater Drehzahlsensor sein oder auch eine Recheneinheit, die aus einem Ansteuersignal für einen die Abtasteinheit antreibenden Motor die Drehfrequenz der Abtasteinheit ermittelt. Diese Recheneinheit kann beispielsweise als Logikeinheit innerhalb der Auswerteeinheit ausgeführt sein. In der Regel ist die Winkelposition der Abtasteinheit relativ zur Sockeleinheit aber ohnehin bekannt bzw. wird mittels eines Winkelpositionsgebers des Objekterfassungssensors erfasst, da diese als Grundlage für die optoelektronische bzw. radarbasierte Bestimmung des Koordinatendatensatzes dient. Insbesondere umfassen die korrigierten Beschleunigungssignale und/oder Winkelgeschwindigkeitssignale nur noch die Beschleunigungskomponenten und/oder Winkelgeschwindigkeitskomponenten, die auf eine Bewegung des Navigationssensors zurückzuführen sind. Sofern sich der Navigationssensor, genauer die Sockeleinheit, in Ruhe befindet, weisen die korrigierten Beschleunigungssignale und/oder Winkelgeschwindigkeitssignale einen Wert von Null auf.

Gemäß einer weiteren vorteilhaften Ausführungsform umfasst die inertiale Messeinheit zumindest einen Winkelratensensor und/oder zumindest einen Beschleunigungssensor. Bevorzugt sind beide Sensortypen in einer inertialen Messeinheit oder Baueinheit integriert.

Gemäß einer weiteren vorteilhaften Ausführungsform ist der zumindest eine Winkelratensensor und/oder der zumindest eine Beschleunigungssensor durch zumindest ein mikro-elektro-mechanisches System gebildet. Derartige mikro-elektro-mechanische Systeme werden abgekürzt auch als MEMS bezeichnet. Derartige MEMS sind für den Masseneinsatz konzipiert und kommen in großen Stückzahlen beispielsweise in Mobilgeräten wie Smartphones oder Tablets zum Einsatz. Aufgrund der daraus resultierenden hohen Fertigungszahlen sind inertiale Messeinheiten, in denen ein oder mehrere MEMS integriert sind, zu sehr geringen Stücckosten erhältlich. Oftmals weisen solche MEMS-basierten inertialen Messeinheiten - wie eingangs erläutert - standardmäßig eine nicht deaktivierbare Nullpunktunterdrückung auf. Die Anordnung an der rotierenden Abtasteinheit erlaubt es nun, die mit der Nullpunktunterdrückung verbundenen Nachteile zu überwinden, die sich bei einer angenommenen ortsfesten Anordnung der inertialen Messeinheit, beispielsweise an der Sockeleinheit, negativ auswirken würden.

Gemäß einer weiteren vorteilhaften Ausführungsform ist der optoelektronische Sensor dazu eingerichtet, den Abstand eines im Überwachungsbereich vorhandenen erfassten Objekts, bevorzugt nach dem Prinzip der Signallaufzeitmessung, d.h. der Laufzeit der Licht- bzw. Radarwellensignale, zu ermitteln. Alternativ kann die Ermittlung des Objektabstands auch nach dem Prinzip der Phasenverschiebung erfolgen.

Weitere Vorteile des erfindungsgemäßen Navigationssensors und vorteilhafte Ausgestaltung ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen. Es zeigt:

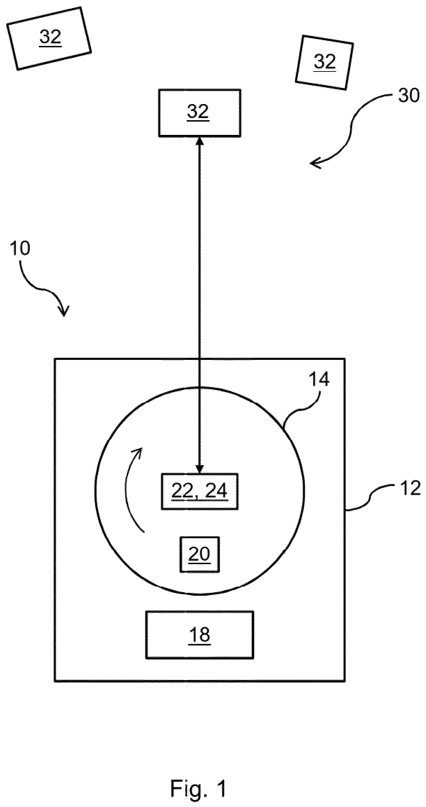

- Fig. 1: eine schematische Darstellung eines Navigationssensors gemäß einem Ausführungsbeispiel.

Fig. 1 zeigt einen Navigationssensor 10 gemäß einem Ausführungsbeispiel, welcher zum Bestimmen eines Koordinatendatensatzes eingerichtet ist. Der Koordinatendatensatz kann eine räumliche Position und/oder eine Lage und/oder eine Bewegung des Navigationssensors oder eines mit dem Navigationssensor 10 verbundenen beweglichen Objekts im Raum (nicht dargestellt) umfassen. Der Navigationssensor 10 umfasst einen beispielsweise als optoelektronischer Sensor ausgestalteten Objekterfassungssensor, welcher zur periodischen Abtastung eines Überwachungsbereichs 30 eingerichtet ist. Der Objekterfassungssensor umfasst eine Sockeleinheit 12 und eine rotierbar an der Sockeleinheit gelagerte Abtasteinheit 14. Antriebsmittel zum rotierenden Antreiben der Abtasteinheit 14 sind in der schematischen Darstellung von Fig. 1 nicht dargestellt.

An der rotierenden Abtasteinheit 14 ist eine Sendevorrichtung 22, welche zum Aussenden von Sendelichtsignalen in den Überwachungsbereich 30 eingerichtet ist, und eine Empfangsvorrichtung 24 angeordnet, welche zum Empfangen von Empfangslichtsignalen, die von im Überwachungsbereich 30 vorhandenen Umgebungsobjekten 32 durch Remission auftreffender Sendelichtsignale erzeugt werden, eingerichtet. Die Sendevorrichtung 22, beispielsweise ein Laser oder eine Laserdiode und die Empfangsvorrichtung 24, welche beispielsweise eine Fotodiode, einen Zeilensensor oder einen Bildsensor umfasst, sind im Ausführungsbeispiel in einer gemeinsamen Baueinheit integriert. Sowohl die Sendevorrichtung 22 als auch die Empfangsvorrichtung 24 können ein oder mehrere jeweilige Optiken umfassen. Zusätzlich können auch noch weitere optische Elemente wie Umlenkelemente, Strahlteiler oder Filter vorgesehen sein.

Die Schilderung im vorhergehenden Absatz bezieht sich auf eine Ausführungsform unter Verwendung eines optoelektronischen Sensors.

An der Abtasteinheit 14 ist zusätzlich eine inertiale Messeinheit 20 angeordnet. Wie durch den gekrümmten Pfeil angedeutet ist, dreht sich die inertiale Messeinheit 20 gemeinsam mit der Sendevorrichtung 22 und der Empfangsvorrichtung 24. Die inertiale Messeinheit 20 ist dazu eingerichtet, Beschleunigungen und/oder Winkelgeschwindigkeiten der rotierenden Abtasteinheit 14 zu erfassen. Sowohl die inertiale Messeinheit 20 als auch die Sendevorrichtung 22 und die Empfangsvorrichtung 24 sind mit einer Auswerteeinheit 18 verbunden, welche im Ausführungsbeispiel an der Sockeleinheit 12 angeordnet ist. Die Übertragung von Signalen zwischen der Auswerteeinheit 18 und den an der Abtasteinheit 14 angeordneten Baugruppen kann sowohl drahtgebunden als auch drahtlos erfolgen.

Die Auswerteeinheit 18 ist dazu eingerichtet, auf der Grundlage der von der Empfangsvorrichtung 24 erzeugten elektrischen Empfangssignale, die ein Szenenbild des Überwachungsbereichs 30 repräsentieren, die räumliche Position, die Lage und/oder Bewegungen des Navigationssensors im Raum bestimmen. Sollte eine optische Bestimmung dieses Koordinatendatensatzes zeitweise nicht möglich sein, so können Änderungen der räumlichen Position, der Lage und/oder der Bewegung des Navigationssensors 10 mittels der inertialen Messeinheit 20 erfasst werden, wobei dann die Bestimmung des Koordinatendatensatzes vorübergehend nur auf der Grundlage dieser von der inertialen Messeinheit 20 erfassten Beschleunigungs- bzw. Winkelgeschwindigkeitssingale erfolgt.

Um die korrigierten Beschleunigungssignale und/oder Winkelgeschwindigkeitssignale, die alleine auf der Relativbewegung des Navigationssensors 10 im Raum zurückzuführen sind, zu ermitteln, können diejenigen Signalkomponenten, die einzig auf die Rotation der inertialen Messeinheit 20 zurückzuführen sind, sowohl rechnerisch unter Berücksichtigung des Abstandes des inertialen Messeinheit 20 von der Drehachse der rotierenden Abtasteinheit 14 und der Drehzahl der Abtasteinheit 14, oder experimentell im Rahmen eines Kalibriervorgangs ermittelt werden. Diese rotationsbedingten Signalkomponenten können dann von den Signalen, die von der inertialen Messeinheit 20 im realen Betrieb gemessen werden, subtrahiert werden, um die korrigierten Beschleunigungssignale und/oder Winkelgeschwindigkeitssignale zu ermitteln. Zweckmäßigerweise erfolgt diese Korrektur vektoriell unter Berücksichtigung der Vektorrichtungen der erfassten beziehungsweise erzeugten Kräfte bzw. Beschleunigungen.

### Bezugszeichenliste

- 10: Navigationssensor
- 12: Sockeleinheit
- 14: Abtasteinheit
- 18: Auswerteeinheit
- 20: inertiale Messeinheit
- 22: Sendevorrichtung
- 24: Empfangsvorrichtung
- 30: Überwachungsbereich
- 32: Umgebungsobjekt

## Patentansprüche

1. Navigationssensor (10) zum Bestimmen eines Koordinatendatensatzes, welcher eine räumliche Position und/oder eine Lage und/oder eine Bewegung des Navigationssensors (10) oder eines mit dem Navigationssensor (10) verbundenen beweglichen Objekts im Raum umfasst, mit
einem Objekterfassungssensor, welcher zur periodischen Abtastung eines Überwachungsbereichs (30) eingerichtet ist und eine Sockeleinheit (12) und eine an der Sockeleinheit (12) rotierbar gelagerte Abtasteinheit (14) umfasst, wobei die Abtasteinheit (14) eine Sendevorrichtung (22), welche zum Aussenden von Sendesignalen in einen Überwachungsbereich (30) eingerichtet ist, und eine Empfangsvorrichtung (24) aufweist, welche zum Empfangen von Empfangssignalen, die von im Überwachungsbereich (30) vorhandenen Umgebungsobjekten (32) durch Remission auftreffender Sendesignale erzeugt werden, und zum Umwandeln der Empfangssignale in elektrische Empfangssignale eingerichtet ist, und
einer mit dem Objekterfassungssensor verbundenen Auswerteeinheit (18), welche dazu eingerichtet ist, zumindest auf der Grundlage der elektrischen Empfangssignale den Koordinatendatensatz zu ermitteln,
wobei auf der Abtasteinheit (14) zumindest eine mit der Auswerteeinheit (18) verbundene inertiale Messeinheit (20) angeordnet ist, welche dazu eingerichtet ist, Beschleunigungen und/oder Winkelgeschwindigkeiten der rotierenden Abtasteinheit (14) zu erfassen und entsprechende Beschleunigungssignale und/oder Winkelgeschwindigkeitssignale an die Auswerteeinheit (18) zu übermitteln, und
wobei die Auswerteeinheit (18) dazu eingerichtet ist, den Koordinatendatensatz zusätzlich auf der Grundlage der Beschleunigungssignale und/oder Winkelgeschwindigkeitssignale zu ermitteln,
**dadurch gekennzeichnet,**
**dass** der Navigationssensor (10) einen mit der Auswerteeinheit (18) verbundenen Drehzahlsensor umfasst, welcher zum Ermitteln der Drehfrequenz der Abtasteinheit (14) relativ zur Sockeleinheit (12) eingerichtet ist, und dass die Auswerteeinheit (18) dazu eingerichtet ist, auf der Grundlage der Drehfrequenz korrigierte Beschleunigungssignale und/oder Winkelgeschwindigkeitssignale zu ermitteln und den Koordinatendatensatz auf der Grundlage der korrigierten Beschleunigungssignale und/oder Winkelgeschwindigkeitssignale zu ermitteln, wobei das Ermitteln der korrigierten Beschleunigungssignale und/oder Winkelgeschwindigkeitssignale ein Reduzieren der Beschleunigungssignale und/oder der Winkelgeschwindigkeitssignale um diejenigen Signalkomponenten umfasst, welche alleine auf die Rotation der Abtasteinheit (14) zurückzuführen sind.

2. Navigationssensor (10) nach Anspruch 1,
**dadurch gekennzeichnet,**
**dass** die inertiale Messeinheit (20) zumindest einen Winkelratensensor und/oder zumindest einen Beschleunigungssensor umfasst.

3. Navigationssensor (10) nach Anspruch 2,
**dadurch gekennzeichnet,**
**dass** der zumindest eine Winkelratensensor und/oder der zumindest eine Beschleunigungssensor durch zumindest ein mikro-elektro-mechanisches System gebildet ist.

4. Navigationssensor (10) nach einem der vorhergehenden Ansprüche,
**dadurch gekennzeichnet,**
**dass** der Objekterfassungssensor als optoelektronischer Sensor ausgebildet ist.

5. Navigationssensor (10) nach Anspruch 4,
**dadurch gekennzeichnet,**
**dass** der optoelektronische Sensor als Laserscanner oder LIDAR-Sensor ausgebildet ist.

6. Navigationssensor (10) nach einem der Ansprüche 1 bis 3,
**dadurch gekennzeichnet,**
**dass** der Objekterfassungssensor als RADAR-Sensor ausgebildet ist.

7. Navigationssensor (10) nach einem der vorhergehenden Ansprüche,
**dadurch gekennzeichnet,**
**dass** der Objekterfassungssensor dazu eingerichtet ist, den Abstand eines im Überwachungsbereich (30) vorhandenen erfassten Umgebungsobjekts (32), bevorzugt nach dem Prinzip der Signallaufzeitmessung, zu ermitteln.

## Claims

1. A navigation sensor (10) for determining a coordinate data set which comprises a spatial position and/or a location and/or a movement of the navigation sensor (10) or of a movable object connected to the navigation sensor (10) in space, said navigation sensor (10) comprising
an object detection sensor which is configured for periodically scanning a monitored zone (30) and which comprises a base unit (12) and a scanning unit (14) rotatably supported at the base unit (12), wherein the scanning unit (14) has a transmission device (22) which is configured for transmitting transmission signals into a monitored zone (30) and a reception device (24) which is configured for receiving reception signals, which are generated by environmental objects (32) present in the monitored zone (30) by a remission of incident transmission signals, and for converting the reception signals into electrical reception signals, and
an evaluation unit (18) which is connected to the object detection sensor and which is configured to determine the coordinate data set at least on the basis of the electrical reception signals,
wherein at least one inertial measurement unit (20) connected to the evaluation unit (18) is arranged at the scanning unit (14) and is configured to detect accelerations and/or angular velocities of the rotating scanning unit (14) and to transmit corresponding acceleration signals and/or angular velocity signals to the evaluation unit (18), and
wherein the evaluation unit (18) is configured to additionally determine the coordinate data set on the basis of the acceleration signals and/or angular velocity signals,
**characterized in that**
the navigation sensor (10) comprises a rotational speed sensor which is connected to the evaluation unit (18) and which is configured for determining the rotational frequency of the scanning unit (14) relative to the base unit (12), and
**in that** the evaluation unit (18) is configured to determine corrected acceleration signals and/or angular velocity signals that are corrected on the basis of the rotational frequency and to determine the coordinate data set on the basis of the corrected acceleration signals and/or angular velocity signals, wherein the determination of the corrected acceleration signals and/or angular velocity signals comprises reducing the acceleration signals and/or the angular velocity signals by those signal components which are solely due to the rotation of the scanning unit (14).

2. A navigation sensor (10) according to claim 1,
**characterized in that**
the inertial measurement unit (20) comprises at least one angular rate sensor and/or at least one acceleration sensor.

3. A navigation sensor (10) according to claim 2,
**characterized in that**
the at least one angular rate sensor and/or the at least one acceleration sensor is/are formed by at least one microelectromechanical system.

4. A navigation sensor (10) according to any one of the preceding claims,
**characterized in that**
the object detection sensor is configured as an optoelectronic sensor.

5. A navigation sensor (10) according to claim 4,
**characterized in that**
the optoelectronic sensor is configured as a laser scanner or a LIDAR sensor.

6. A navigation sensor (10) according to any one of the claims 1 to 3,
**characterized in that**
the object detection sensor is configured as a RADAR sensor.

7. A navigation sensor (10) according to any one of the preceding claims,
**characterized in that**
the object detection sensor is configured to determine the distance of a detected environmental object (32) present in the monitored zone (30), preferably in accordance with the principle of signal transit time measurement.

## Revendications

1. Capteur de navigation (10) pour déterminer un ensemble de données de coordonnées qui comprend une position spatiale et/ou une orientation et/ou un mouvement dans l'espace du capteur de navigation (10) ou d'un objet mobile relié au capteur de navigation (10), comprenant
un capteur de détection d'objets qui est conçu pour balayer périodiquement une zone à surveiller (30) et qui comprend une unité de base (12) et une unité de balayage (14) montée de manière rotative sur l'unité de base (12), l'unité de balayage (14) comprenant un dispositif d'émission (22), conçu pour émettre des signaux d'émission dans une zone à surveiller (30), et un dispositif de réception (24) conçu pour recevoir des signaux de réception générés par des objets environnants (32), présents dans la zone à surveiller (30), par renvoi des signaux d'émission incidents, et pour convertir les signaux de réception en signaux de réception électriques, et
une unité d'évaluation (18) reliée au capteur de détection d'objets, qui est conçue pour déterminer l'ensemble de données de coordonnées au moins sur la base des signaux de réception électriques,
dans lequel
au moins une unité de mesure inertielle (20) reliée à l'unité d'évaluation (18) est disposée sur l'unité de balayage (14) et est conçue pour détecter les accélérations et/ou les vitesses angulaires de l'unité de balayage (14) en rotation et pour transmettre à l'unité d'évaluation (18) les signaux d'accélération et/ou les signaux de vitesse angulaire correspondants, et
l'unité d'évaluation (18) est conçue pour déterminer l'ensemble de données de coordonnées en supplément sur la base des signaux d'accélération et/ou des signaux de vitesse angulaire,
**caractérisé en ce que**
le capteur de navigation (10) comprend un capteur de vitesse de rotation relié à l'unité d'évaluation (18), qui est conçu pour déterminer la fréquence de rotation de l'unité de balayage (14) par rapport à l'unité de base (12), et **en ce que** l'unité d'évaluation (18) est conçue pour déterminer, sur la base de la fréquence de rotation, des signaux d'accélération et/ou des signaux de vitesse angulaire corrigés et pour déterminer l'ensemble de données de coordonnées sur la base des signaux d'accélération et/ou des signaux de vitesse angulaire corrigés, la détermination des signaux d'accélération et/ou des signaux de vitesse angulaire corrigés consistant à réduire les signaux d'accélération et/ou les signaux de vitesse angulaire des composantes de signal qui sont uniquement dues à la rotation de l'unité de balayage (14).

2. Capteur de navigation (10) selon la revendication 1,
**caractérisé en ce que**
l'unité de mesure inertielle (20) comprend au moins un capteur de vitesse angulaire et/ou au moins un capteur d'accélération.

3. Capteur de navigation (10) selon la revendication 2,
**caractérisé en ce que**
ledit au moins un capteur de vitesse angulaire et/ou ledit au moins un capteur d'accélération est formé par au moins un système micro-électro-mécanique.

4. Capteur de navigation (10) selon l'une des revendications précédentes,
**caractérisé en ce que**
le capteur de détection d'objets est conçu comme un capteur optoélectronique.

5. Capteur de navigation (10) selon la revendication 4,
**caractérisé en ce que**
le capteur optoélectronique est conçu comme un scanner laser ou un capteur LIDAR.

6. Capteur de navigation (10) selon l'une des revendications 1 à 3,
**caractérisé en ce que**
le capteur de détection d'objets est conçu comme un capteur RADAR.

7. Capteur de navigation (10) selon l'une des revendications précédentes,
**caractérisé en ce que**
le capteur de détection d'objets est conçu pour déterminer la distance d'un objet environnant (32) détecté, présent dans la zone à surveiller (30), de préférence selon le principe de la mesure du temps de propagation du signal.
